(19) Europäisches Patentamt
European Patent Office
Office européen des brevets

(11) **EP 1 600 852 B1**

(12) **EUROPEAN PATENT SPECIFICATION**

(45) Date of publication and mention
of the grant of the patent:
**02.12.2009 Bulletin 2009/49**

(51) Int Cl.:
*G06F 7/72* (2006.01)

(21) Application number: **05253278.5**

(22) Date of filing: **27.05.2005**

(54) **Method and apparatus for calculating a modular inverse**

Verfahren und Vorrichtung zur Berechnung einer modularen Inversen

Procédé et appareil pour calculer une inverse modulaire

(84) Designated Contracting States:
**AT BE BG CH CY CZ DE DK EE ES FI FR GB GR HU IE IS IT LI LT LU MC NL PL PT RO SE SI SK TR**

(30) Priority: **29.05.2004 GB 0412084**

(43) Date of publication of application:
**30.11.2005 Bulletin 2005/48**

(73) Proprietor: **The Queen's University of Belfast**
**Belfast BT7 1NN (GB)**

(72) Inventors:
• **McIvor, Ciaran James**
**Belfast, BT15 5AP**
**Northern Ireland (GB)**
• **McCanny, John Vincent**
**Newtownards, BT23 7UG**
**Northern Ireland (GB)**

(74) Representative: **Cooper, John et al**
**Murgitroyd & Company**
**165-169 Scotland Street**
**Glasgow G5 8PL (GB)**

(56) References cited:
• SAVAS E KOC C K: "The montgomery modular inverse-revisited" IEEE TRANSACTIONS ON COMPUTERS, IEEE SERVICE CENTER, LOS ALAMITOS, CA, US, vol. 49, no. 7, July 2000 (2000-07), pages 763-766, XP002955515 ISSN: 0018-9340
• KALISKI B S: "THE MONTGOMERY INVERSE AND ITS APPLICATIONS" IEEE TRANSACTIONS ON COMPUTERS, IEEE SERVICE CENTER, LOS ALAMITOS, CA, US, vol. 44, no. 8, 1 August 1995 (1995-08-01), pages 1064-1065, XP000525965 ISSN: 0018-9340
• LORENCZ R: "NEW ALGORITHM FOR CLASSICAL MODULAR INVERSE" CRYPTOGRAPHIC HARDWARE AND EMBEDDED SYSTEMS. INTERNATIONAL WORKSHOP, 13 August 2002 (2002-08-13), pages 57-70, XP001160521
• DALYY A ET AL: "Fast Modular Inversion in the Montgomery Domain on Recon gurable Logic" INTERNET CITATION, [Online] 1 July 2003 (2003-07-01), XP007901451 Retrieved from the Internet: URL:http://eee.ucc.ie/staff/marnanel/ Files /papers/Daly_Marnane_Popovici_I SSC2003.pdf> [retrieved on 2006-12-13]
• LORENCZ R ET AL: "Subtraction-free Almost Montgomery Inverse algorithm" INFORMATION PROCESSING LETTERS, AMSTERDAM, NL, vol. 94, no. 1, 15 April 2005 (2005-04-15), pages 11-14, XP004764737 ISSN: 0020-0190

**Description**

Field of the Invention

The present invention relates to a method and apparatus for calculating a modular inverse.

Background of the Invention

The background of the invention will now be described with reference to the accompanying tables in which:

Table 1 shows the input and output variables employed in the Kaliski method of calculating a classical modular inverse and a Montgomery modular inverse;
Table 2 provides a pseudo-code listing of the steps involved in the implementation of the Kaliski method of calculating a classical modular inverse and a Montgomery modular inverse;
Table 3 shows the input and output variables employed in the Savas and Koç method of calculating a classical modular inverse and a Montgomery modular inverse; and
Table 4 provides a pseudo-code listing of the steps involved in the implementation of the Savas and Koç method of calculating a classical modular inverse and a Montgomery modular inverse.

Recent years has seen rapid growth in the area of electronic communications and electronic commerce (e.g. email, online shopping and online banking). With this growth, there has been increased demand for mechanisms of ensuring the security of such communications. Public key encryption systems are useful in this context as they provide the features of confidentiality, authentication, data integrity and non-repudiation.
Accordingly, the problem facing the security industry is that of producing high-speed, low-cost and robust cryptographic products in order to satisfy customer demands for real-time encryption and repel cryptanalytic attacks.
Modular arithmetic is a key ingredient of many public key crypto-systems. It provides finite structures (called "rings") which have all the usual arithmetic operations of integers and which can be easily implemented with existing computer hardware.
Given an integer a and a k-bit integer p ($2^{k-1} \leq p < 2^k$), $a^{-1}$ (mod p) is the modular (multiplicative) inverse of a (mod p) and is classically defined as the integer ModInv(a) such that

$$a*\text{ModInv(a)} = 1 \ (\text{mod } p) \qquad\qquad (1)$$

The above expression only has a unique solution if a and p are relatively prime.
Modular multiplicative inversion has a number of uses in cryptography. In particular, one its main uses is in the generation of private keys from public keys in accordance with the well-known RSA algorithm. These private keys are used to decrypt a message encrypted (by the RSA algorithm) with the public key. Such private keys may also be used as digital signatures to enable the identification of the originator of a digital communication and to guarantee the integrity of the communication.
Modular multiplicative inversion is also used in a wide variety of elliptic curve cryptosystems. For instance, the El Gamal algorithm is based on the multiplication of a secret integer with a point on an elliptic curve to generate a public key. A digital communication is then encrypted by further scalar multiplication with the public key. The above scalar point multiplications can be represented as a number of point addition and doubling operations which are based on the calculation of modular multiplicative inverses.
Modular inverses have been traditionally calculated using the extended Euclidean algorithm. However, this algorithm is iterative in nature and thus, may be slow to calculate the modular inverse of a large number. This feature is becoming increasingly problematic as ever larger keys are used to make it more difficult for unauthorised persons to crack encryption schemes. In view of the problems with the extended Euclidean algorithm and the demand for high-speed or real-time encryption, one of the main objectives of the present invention is to provide a mechanism for rapidly calculating modular inverses for use in RSA key generation and elliptic curve cryptography.
Modular inverses are also used for calculating modular exponents that are used in the RSA algorithm, Diffie Hellman key exchange scheme and ElGamal encryption scheme. One method of performing modular exponentiation is to break it up into a series of modular multiplication operations in an addition-subtraction chaining approach. Using this approach, given integers integer a, c and p where a< p, the modular exponent $a^c$ (mod p) can be calculated by multiplying intermediate values starting with a and $a^{-1}$ (mod p).
The Montgomery multiplication algorithm (*P. L. Montgomery, Math. Computation (44) 519-521*) is a technique that provides an efficient mechanism for implementing modular multiplication. In particular, given an integer a< n, where p is a k-bit integer ($2^{k-1} \leq p < 2^k$), A is said to be its p-residue with respect to r = $2^k$ if,

$$A = a*r \pmod{p} \qquad (2)$$

Likewise, given an integer b < p, B is said to be its p-residue with respect to r if,

$$B = b*r \pmod{p} \qquad (3)$$

The Montgomery product of the two residues A and B can then be defined as the scaled product,

$$MP = A*B*r^{-1} \pmod{p} \qquad (4)$$

where $r^{-1}$ is the multiplicative inverse of r modulo p (i.e. $r*r^{-1} =1 \pmod{p}$).
However, since r = $2^k$, the Montgomery product can also be represented as

$$MP=A*B*2^{-k} \pmod{p} \qquad (5)$$

From this expression it can be seen that the Montgomery multiplication algorithm effectively replaces the step of division by p in an ordinary modular multiplication process with a division by a power of two (i.e. a shift operation).
Consequently, the Montgomery multiplication algorithm is particularly suited to the inherently binary nature of general-purpose computers and provides a simpler and faster method of performing modular multiplication than more traditional methods.
The above-described Montgomery multiplication algorithm can also be used to calculate modular exponents in an addition-subtraction chaining approach. Using this approach, the modular exponent $a^c \pmod{p}$ may be calculated from intermediate values starting with $a*2^k \pmod{p}$ and $a^{-1}*2^k \pmod{p}$.
Using the representation scheme employed in the Montgomery multiplication algorithm the Montgomery modular inverse of an integer a (henceforth referred to as MonInv(a)) is defined as

$$MonInv(a) = a^{-1}*2^k \pmod{p} \qquad (6)$$

At present, there are two methods available for calculating a Montgomery modular inverse, namely the Kaliski method and the Savas and Koç method. Both of these methods will be discussed in more detail below.

(a) Kaliski Method of Calculating a Montgomery Modular Inverse

Kaliski (B.S. Kaliski, IEEE Trans. Computers 44(8), 1064-1065) developed a two stage algorithm for calculating the Montgomery modular inverse. In the first stage an "Almost Montgomery Inverse" is calculated, wherein the "Almost Montgomery Inverse" (Phase1 (a)) is defined as

$$Phase1 (a) = a^{-1} 2^z \pmod{p} \qquad (7)$$

where z is an integer and $k \leq z \leq 2k$.
The second stage of Kaliski's algorithm completes the operation by using the "Almost Montgomery Inverse" (Phase1 (a)) and z to calculate MonInv(a).
A variant of the Kaliski algorithm can be used for calculating a classical modular inverse. Accordingly, there are two separate Kaliski algorithms, the first of which (Kaliski ModInv()) provides a mechanism of calculating a classical modular inverse and the second of which (Kaliski MonInv()) provides a mechanism of calculating a Montgomery modular inverse of an integer already in the Montgomery domain.

The input and output variables to the two Kaliski algorithms are outlined in Table 1. The steps involved in the implementation of the two Kaliski algorithms are shown in Table 2. Referring to Table 2 it can be seen that both Kaliski algorithms employ recurrence loops to achieve inversion.

(b) Savas and Koç Method of Calculating a Montgomery Modular Inverse

Savas and Koç (E. Savas and C.K. Koç,: IEEE Trans. on Computers, 49(7), 763-766) suggested that Montgomery multiplication could be used to replace the iterative loops in the Kaliski algorithms. In particular, if m is defined to be an integer multiple of the word size (w) of the host computer system and $m \geq k$, the output z from Phase 1 of the Kaliski method is an integer satisfying $k \leq z \leq k+m$.

The Savas and Koç algorithms further assume that $R^2 = 2^{2m} \pmod{p}$ and the inputs to the Montgomery product function (MP) are m-bit integers.

In a similar fashion to the Kaliski algorithms, a variant of the Savas and Koç algorithm can be used for calculating a classical modular inverse. Accordingly, there are two separate Savas and Koç algorithms, the first of which (Savas/Koç ModInv()) provides a mechanism of calculating a classical modular inverse and the second of which (Savas/Koç MonInv ()) provides a mechanism of calculating a Montgomery Modular Inverse.

The input and output variables to the two Savas and Koç algorithms are outlined in Table 3. Table 4 outlines the steps involved in the implementation of the two Savas and Koç algorithms.

Referring to Table 4 it can be seen that the Savas and Koç ModInv() algorithm involves one or two Montgomery multiplication operations. Similarly, the Savas and Koç MonInv() algorithm involves two or three Montgomery multiplication operations.

Both the Kaliski and Savas and Koç algorithms were originally developed for software implementation. If these algorithms were to be implemented in hardware, then two separate circuit architectures would be required.

Summary of the Invention

According to the invention there is provided a cryptographic method of calculating a classical modular inverse or a Montgomery modular inverse of an integer a (mod p), where p is a k-bit integer, using a hardware implementation comprising the steps of:

    (1) calculating the "Almost Montgomery Inverse" of a first input variable;
    (2) maintaining an integer variable z;
    (3) calculating the Montgomery modular product of the output from (1) and a second input variable in the event that z=k;
    (4)

        (a) calculating the Montgomery modular product of the output from (1) and $2^{2 \cdot k - z}$; and
        (b) calculating the Montgomery modular product of the output from 4a and the second input variable in the event that z≠k; and further comprising the step of:

            selecting a first and second input variable when calculating the classical modular inverse being different from the first and second input variables selected when calculating the Montgomery modular inverse.

Preferably, the first input variable is a and the second input variable is one when calculating a classical modular inverse; and the first input variable is $a2^k \bmod(p)$ and the second input variable is $R^2$ when calculating the Montgomery modular inverse.

According to a second aspect of the invention there is provided a hardware implementation for performing a cryptographic method of calculating a classical modular inverse or a Montgomery modular inverse of an integer a (mod p), where p is a k-bit integer, comprising:

    (1) a first calculating means operable to calculate an "Almost Montgomery Inverse" of a first input variable;
    (2) a counting means z;
    (3) a second calculating means operable to calculate a Montgomery modular product of the output from the first calculating means and the second input variable in the event that z=k;
    (4) a third calculating means operable to calculate a Montgomery modular product of the output of the first calculating means and $2^{2 \cdot k - z}$ in the event that z≠k;
    (5) a fourth calculating means operable to calculate a Montgomery modular product of the output from the third calculating means and the second input variable in the event that z≠k;

and further comprising a means of selecting a first and second input variable when calculating the classical modular inverse being different from the first and second input variables selected when calculating the Montgomery modular inverse.

Preferably, the first input variable is a and the second input variable is one when calculating a classical modular inverse and the first input variable is $a2^k$ (mod p) and the second input variable is $R^2$ when calculating a Montgomery modular inverse.

Preferably, the hardware implementation further comprises a means of transmitting the output of the fourth calculating means.

Preferably, the second calculating means is implemented in a control unit that further comprises a logic unit which compares z and k.

Desirably, the second, third and fourth calculating means comprise a multiplier unit, an addition unit and a subtraction unit.

Desirably, the addition unit and the subtraction unit employ fast carry chains and two's complement addition.

Desirably, the multiplier unit comprises a plurality of cascaded unsigned multiplier units.

Preferably, the multiplier unit comprises a means of adding the outputs from the unsigned multiplier units employing look-ahead carry chains.

Preferably, the hardware implementation is a field programmable gate array.

Optionally, the hardware implementation is an application specific integrated circuit.

Preferably, the hardware implementation operates on 256 bit data.

According to a third aspect of the invention there is provided a method of generating a private encryption key from a public encryption key by calculating the modular inverse of the public encryption key with the method of the first aspect.

Preferably, the private encryption key is employed in an RSA algorithm.

According to a fourth aspect of the invention there is provided an apparatus for generating a private encryption key from a public encryption key comprising a means for performing the method of the third aspect.

According to a fifth aspect of the invention there is provided a digital signature generated from the private key produced by the method of the third aspect.

According to a sixth aspect of the invention there is provided a method of encrypting data comprising the steps of:

(a) selecting a point on an elliptical curve;
(b) determining a public key from the point on the elliptical curve and a pre-selected number; and
(c) encrypting the data with the public key

wherein the steps of determining the public key and encrypting the data with the public key employ the method of the first aspect.

According to a seventh aspect of the invention there is provided an apparatus for encrypting data comprising:

(a) a means of selecting a point on an elliptical curve;
(b) a means of determining a public key from the point on the elliptical curve and a pre-selected number; and
(c) a means of encrypting the data with the public key

wherein the means of determining the public key and the means of encrypting the data with the public key employ the hardware implementation of the second aspect.

Advantages of the Invention

The present invention improves on the algorithms developed by Kaliski and Savas and Koç by providing a single unified algorithm that can compute both the classical modular inverse and the Montgomery modular inverse of an integer. Accordingly, the present invention provides a mechanism for substantially reducing the silicon usage of hardware implementations of traditional modular inversion algorithms.

Whilst the present invention, in common with the Kaliski and Savas and Koç algorithms, performs Montgomery modular multiplication, it achieves a 33% reduction in the number of such multiplication operations compared with the prior art algorithms.

Description and Drawings

An embodiment of the invention will now be described with reference to the accompanying drawings and tables in which:

Figure 1 is a block diagram of a 256-bit circuit architecture according to the second aspect employed to calculate a classical modular inverse;

Figure 2 is a block diagram of a 256-bit Montgomery multiplication module employed in the circuit architecture shown in Figure 1;

Figure 3 is a block diagram of a cascaded multiplier used in a multiplier unit in the Montgomery multiplication module shown in Figure 2;

Table 5 lists input and output variables employed in the method according to the first aspect;

Table 6 comprises pseudo-code that outlines the steps involved in implementing the method according to the first aspect;

Table 7 comprises pseudo-code that outlines the steps involved in performing a Phase1 calculation in the implementation shown in Table 6;

Table 8 comprises pseudo-code that outlines the steps involved in performing a Montgomery multiplication operation in the implementation shown in Table 6; and

Table 9 lists the results of the comparative analysis of the performance of the hardware implementations of the method according to the first aspect and the conventional Kaliski and Savas and Koç algorithms.

For the sake of brevity, the method of calculating a classical modular inverse and a Montgomery modular inverse of an integer in accordance with the invention will be known henceforth as the unified inversion algorithm. Accordingly, the following description will first describe the unified inversion algorithm and will provide evidence of its advantages by way of a hardware implementation.

A. Unified Inversion Algorithm

As previously mentioned, the unified inversion algorithm provides a single, efficient algorithm for computing both the classical modular inverse and the Montgomery modular inverse of an integer already in the Montgomery domain. The algorithm is a two-stage process in which the output from the first stage (in common with the output from the first stage of the Kaliski algorithms) is the integer satisfying $k \leq z \leq 2k$. The unified inversion algorithm further assumes that $R^2 = 2^{2k} \pmod p$ and the inputs to the Montgomery modular multiplication function (MP()) are k-bit integers.

For the sake of clarity, the following discussion will separately discuss the classical modular inverse calculation steps from those of the Montgomery modular inverse calculations. However, it will be realised that in actuality, these calculations are embraced within the same single algorithm and that the separation of these calculations in the following discussion is solely for the purpose of clarifying the description. Consequently, the following description should be in no way construed as meaning that there are two separate algorithms for calculating the modular inverses.

Referring to Table 5, it will be noted that in order to calculate the classical modular inverse (ModInv(a)) the pair of variables (a, 1) is input to the unified inversion algorithm. Similarly, in order to calculate the Montgomery modular inverse (MonInv(a)) of an integer already in the Montgomery domain, the pair ($a2^k \pmod p$, $R^2$) are input to the unified inversion algorithm.

It will be recalled the Savas and Koç algorithm for calculating a Montgomery modular inverse required a maximum of three Montgomery multiplication operations. Referring to Table 6 it will be noted that the unified inversion algorithm is more efficient than the Savas and Koç algorithm for computing a Montgomery modular inverse, since the unified inversion algorithm requires at most only two Montgomery multiplication operations. Consequently, the unified inversion algorithm provides at least a 33% saving in the required number of Montgomery multiplication operations.

Furthermore, the unified inversion algorithm is particularly suited for hardware (and indeed software) implementations, since a single circuit architecture can be used to compute both types of modular inverse.

B. Field Programmable Gate Array (FPGA) Hardware Implementation of the Unified Inversion Algorithm

The following discussion will provide a broad overview of an example of a hardware implementation of the unified inversion algorithm. This will be followed with a more detailed description of a hardware implementation of a Montgomery multiplication component of the unified inversion algorithm. The description will finish with experimental results providing a comparative analysis of the performance of the hardware implementation of the unified inversion algorithm, with hardware implementations of the conventional Kaliski and Savas and Koç algorithms. For the sake of brevity, the hardware implementation of the unified inversion algorithm will be known henceforth as the unified inversion circuit.

The following discussion describes an example of a 256-bit hardware implementation of the unified inversion algorithm. It will be appreciated that the unified inversion algorithm is not limited to the specific details of the hardware implementation described below and that other hardware implementations of the algorithm are possible.

## 1. Overview

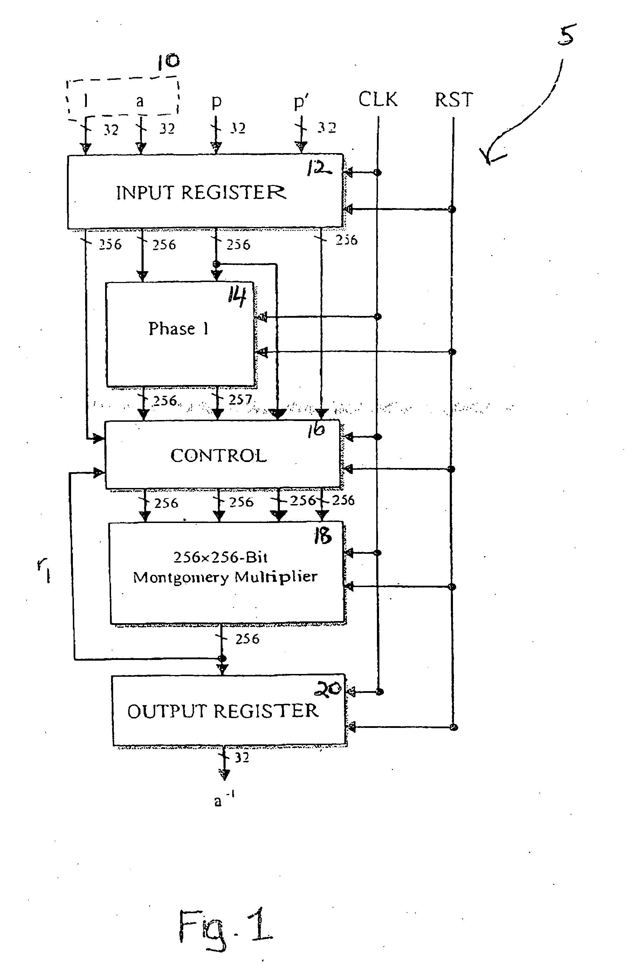

Referring to Figure 1, when computing a classical modular inverse, the unified inversion circuit 5 employs input values 10 of *a* and *1*. However, when calculating the Montgomery modular inverse of an integer already in the Montgomery domain, input values 10 of $a^{2k}$ *(mod p)* and $R^2$ are employed.

Returning to the example depicted in Figure 1, the input values 10 are registered 12 into the unified inversion circuit 5 at 32-bits per clock cycle over 8 cycles. The values a and p are then fed into a *Phase1* component 14, which comprises a 256-bit adder and subtractor (not shown), implemented using fast carry chains located on, for example, a Virtex2 Pro device. The addition and subtraction operations are performed sequentially in accordance with the pseudo-code shown in Table 7, using a state machine approach.

The resulting values *Phase1(a)* and z are then stored in a control unit 16. The value $2^{2k-z}$ is also calculated in the control unit 16. A comparison between *z* and *k* is also performed in the control unit 16 to determine the inputs to a 256-bit Montgomery multiplier 18. In particular, if *z=k* then only one modular multiplication is required. However, if *z≠k* two multiplication operations are required and the output variable $r_1$ from the Montgomery multiplier 18 is fed back into the control unit 16 to be reused as an input to the Montgomery multiplier 18. Once the necessary modular multiplications have been completed, the variable $a^{-1}$ is output 20 from the unified inversion circuit 5 at 32-bits per clock cycle over 8 cycles.

## 2. Montgomery Multiplier (18)

### 2(a) Overview

The steps performed in the Montgomery multiplier 18 are shown in Table 8. It will be noted that the Montgomery multiplication algorithm assumes that n is the k-bit modulus of integers A and B, r = $2^k$, $rr^{-1}$-nn'=1 and $r^{-1}r$ = 1 (mod n). The main calculations performed in the Montgomery multiplication algorithm include three full-word multiplications, one full-word addition, and a conditional full-word subtraction. In practice, the full-word addition and subtraction operations are performed using fast carry chains and two's-complement addition.

### 2(b) Hardware Implementation

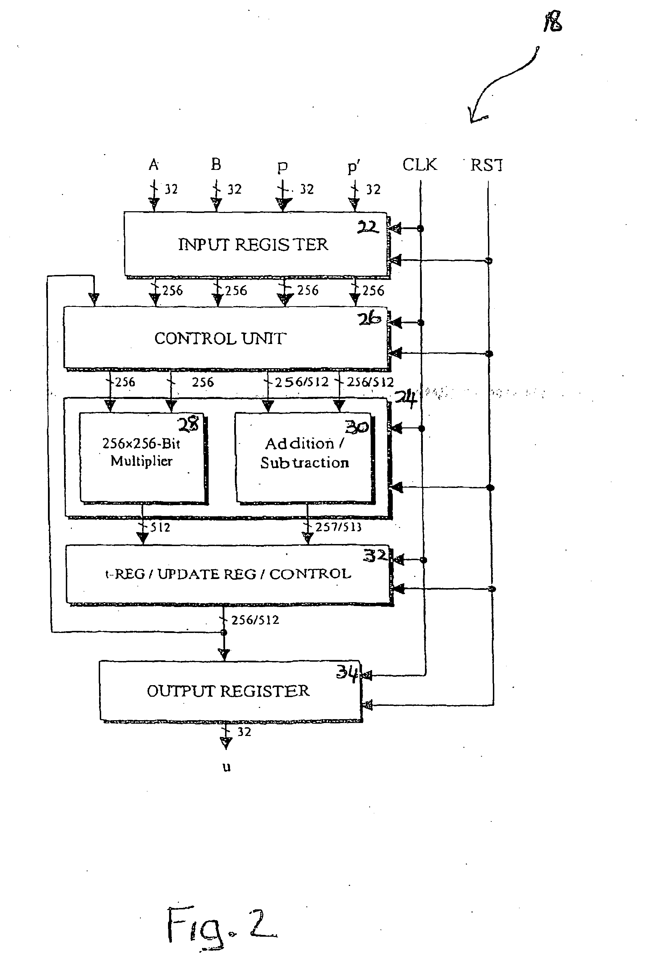

Referring to Figure 2, the inputs to the 256-bit Montgomery multiplier architecture 18 are registered 22 into the Montgomery multiplier 18 at a rate of 32-bits per clock cycle over a period of 8 cycles. The main calculation operations of the Montgomery multiplication algorithm are performed in a calculation unit 24 that operates under the control of a control unit 26. The calculation unit 24 comprises a 256x256 bit multiplier unit 28 and an addition/subtraction unit 30.

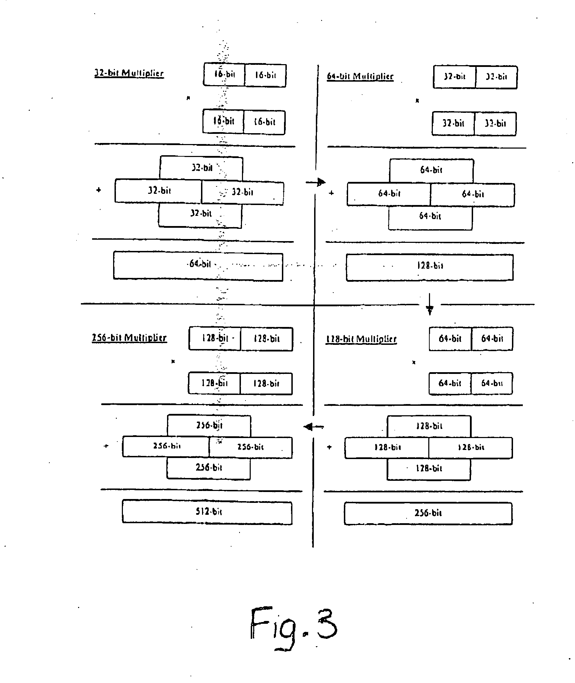

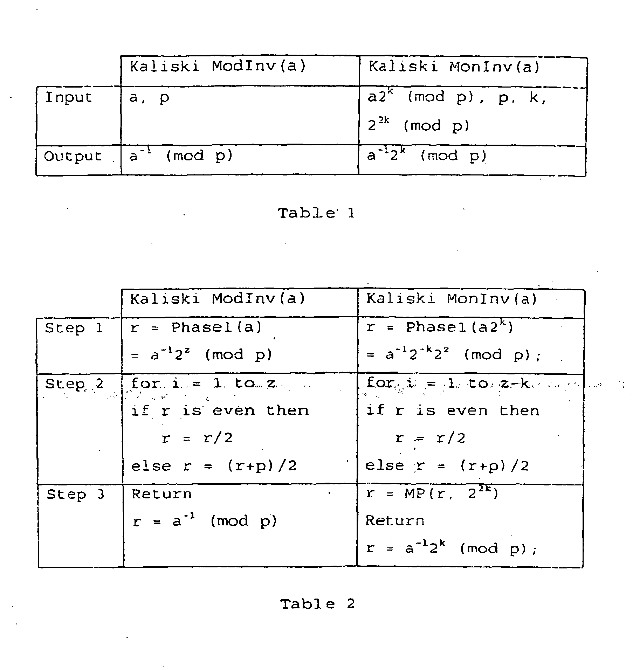

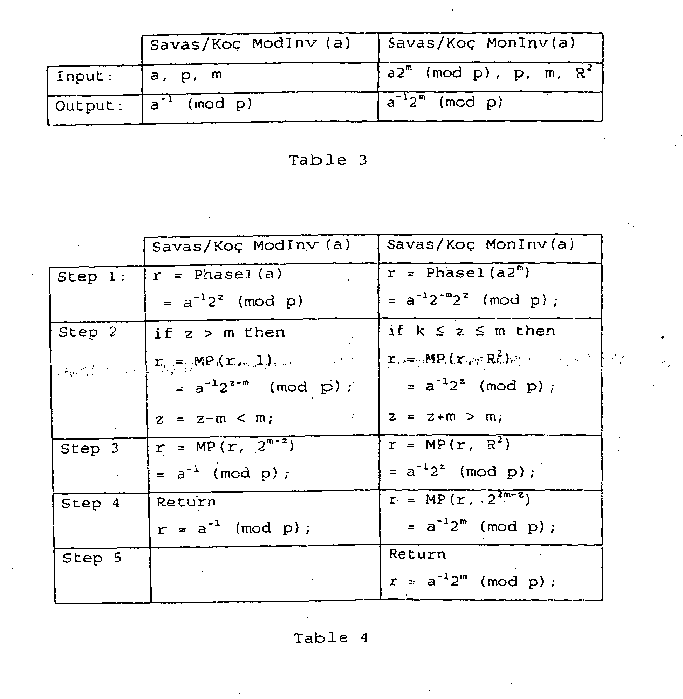

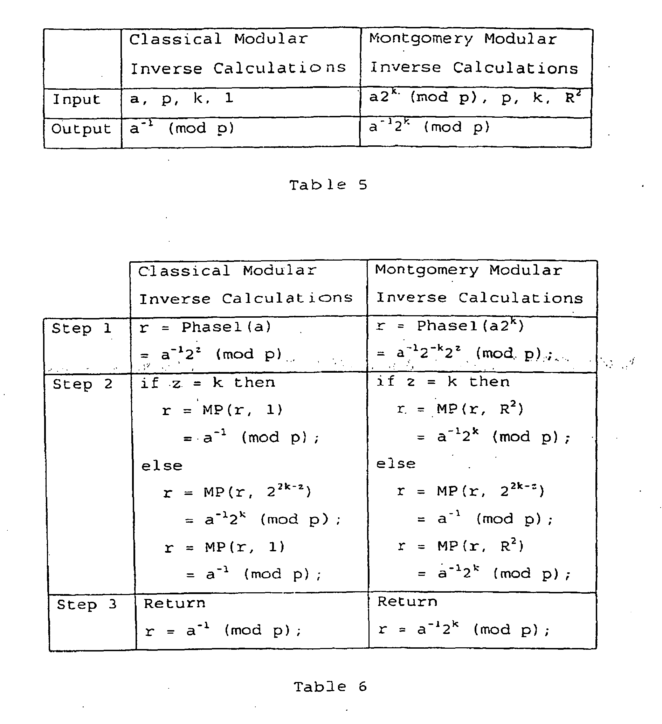

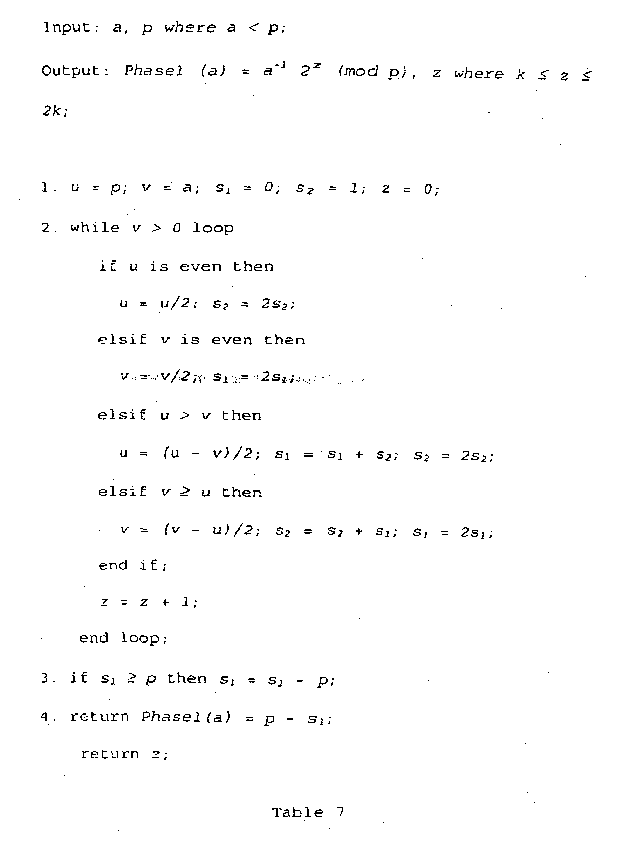

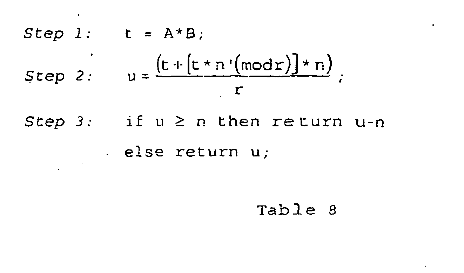

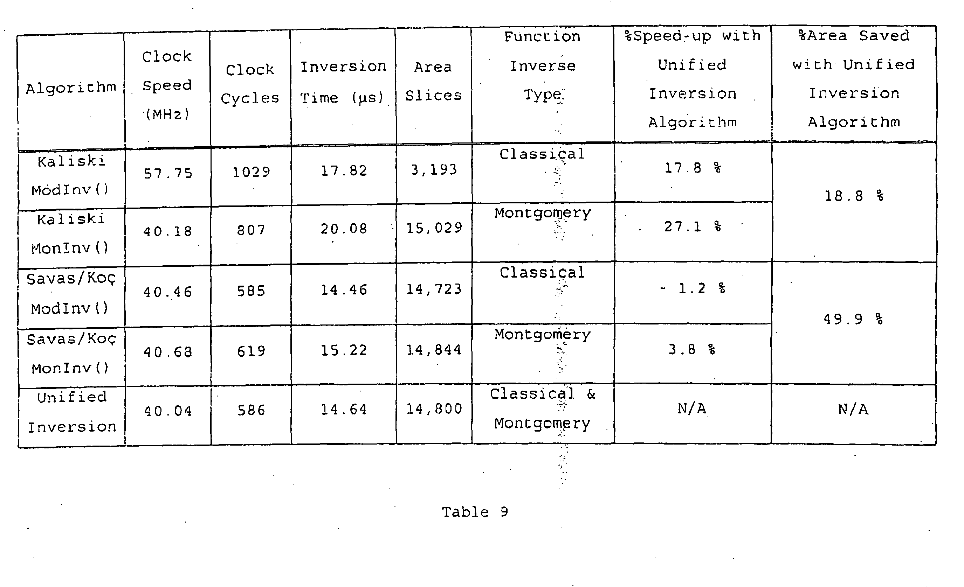

Referring to Figure 3, the 256x256-bit multiplier unit 28 is developed by cascading numerous 16×16-bit unsigned multipliers. The partial products from the cascaded 16x16-bit unsigned multipliers are added together using fast look-ahead carry chains until the desired multiplier size is attained. The calculation and addition of the partial products from the cascaded 16x16-bit unsigned multipliers is a fully pipelined process, designed to take full advantage of the small critical path delay of the 16x16-bit multiplier blocks and the fast carry chains. Therefore it takes 3, 5, 7, and 9 clock cycles to respectively complete 32, 64, 128, and 256 bit multiplication operations.

Returning to Figure 2, the control unit 26 determines the order in which the multiplications, addition and conditional subtraction operations of the calculation unit 26 are performed.

The *t-REG/UPDATE REG/CONTROL* component 32 stores the product t=A*B and the results of the other multiplication and addition operations, which are then fed back into the control unit 26 to be re-used as inputs to the 256x256-bit multiplier unit 28 or *Addition/Subtraction* component 30. The *t-REG/UPDATE REG/CONTROL* component 32 also performs the trivial mod and div operations. Once the conditional subtraction has been performed, the variable u is output from the output register 34 at a rate of 32-bits per cycle over a period of 8 clock cycles.

## 3. Comparative Performance Analysis

The performance of the unified inversion algorithm compared with the Kaliski and Savas and Koç algorithms was investigated by capturing the algorithms in VHDL and implementing the algorithms on a Xilinx Virtex2 Pro XC2VP125 FPGA (using a 256-bit operand length). The Montgomery multiplication calculations were performed using the algorithm described by Koç *et al*. (C.K. Koç, T. Acar and B.S. Kaliski, IEEE Micro, 16(3), 26-33).

Table 7 shows the results of experiments (obtained using Xilinx Foundation software v6.1.03i) comparing the performance of the above algorithms. Referring to Table 7, it can be seen that using the unified inversion algorithm instead of Kaliski's algorithms to calculate the classical inverse and the Montgomery modular inverse of an integer already in the Montgomery domain, results in a speed up of 17.8% and 27.1% respectively.

Furthermore, because a modular inverter circuit can be implemented using a single unified inversion circuit in place of the two separate circuits required to implement both of Kaliski's algorithms, an overall reduction of 18.8% in the number of slices used is achievable. This percentage is a relative measure calculated by computing the difference between the number of slices required to implement Kaliski's algorithms and the number of slices required by the unified inversion circuit; and then dividing the difference by the number of slices required to implement Kaliski's algorithms.

Whilst the unified inversion algorithm does not provide a significant speed-up if used instead of the Savas/Koc algorithms, nonetheless, the unified inversion circuit provides a 49.9% reduction in the silicon area usage compared with the Savas and Koç algorithms (using the same relative measurement as used when comparing against the Kaliski algorithms).

Similar speed-ups and savings in source code/silicon area are attainable if the unified inversion, Kaliski and Savas and Koç algorithms are implemented in software or alternative hardware media, e.g. modern application specific integrated circuit (ASIC) devices, since the unified inversion algorithm has an inherently less complicated structure than the other algorithms.

Modifications and alterations may be made to the above without departing from the scope of the invention.

**Claims**

1. Cryptographic method of calculating a classical modular inverse or a Montgomery modular inverse of an integer a (mod p), where p is a k-bit integer, using a hardware implementation, comprising the steps of:

   (1) calculating the "Almost Montgomery Inverse" of a first input variable;
   (2) maintaining an integer variable z;
   (3) calculating the Montgomery modular product of the output from (1) and a second input variable in the event that z=k;
   (4)

      (a) calculating the Montgomery modular product of the output from (1) and $2^{2*k-z}$; and
      (b) calculating the Montgomery modular product of the output from 4a and the second input variable in the event that $z \neq k$ ; and further comprising the step of:

         selecting a first and second input variable when calculating the classical modular inverse being different from the first and second input variables selected when calculating the Montgomery modular inverse.

2. Cryptographic method using a hardware implementation as claimed in Claim 1 wherein the first input variable is a and the second input variable is one when calculating a classical modular inverse; and the first input variable is $a2^k$ mod(p) and the second input variable is $R^2$ when calculating the Montgomery modular inverse.

3. A method of generating a private encryption key from a public encryption key by calculating the modular inverse of the public encryption key with the method as claimed in Claim 1 or Claim 2.

4. A method of encrypting data employing the private encryption key generated by the method as claimed in Claim 3, wherein the private encryption key is employed in an RSA algorithm.

5. A method of encrypting data comprising the steps of:

   (a) selecting a point on an elliptical curve;
   (b) determining a public key from the point on the elliptical curve and a pre-selected number; and
   (c) encrypting the data with the public key

   wherein the steps of determining the public key and encrypting the data with the public key employ the method as claimed in Claim 1 or Claim 2.

6. Hardware implementation for performing a cryptographic method of calculating a classical modular inverse or a Montgomery modular inverse of an integer a (mod p), where p is a k-bit integer, comprising:

   (1) a first calculating means (14) operable to calculate an "Almost Montgomery Inverse" of a first input variable (10);
   (2) a counting means z;

(3) a second calculating means (18) operable to calculate a Montgomery modular product of the output from the first calculating means and the second input variable in the event that z=k;

(4) a third calculating means operable to calculate a Montgomery modular product of the output of the first calculating means and $2^{2*k-z}$ in the event that $z \neq k$;

(5) a fourth calculating means operable to calculate a Montgomery modular product of the output from the third calculating means and the second input variable in the event that $z \neq k$;

and further comprising a means of selecting a first and second input variable when calculating the classical modular inverse being different from the first and second input variables selected when calculating the Montgomery modular inverse.

7. A hardware implementation as claimed in Claim 6 wherein the first input variable is a and the second input variable is one when calculating a classical modular inverse and the first input variable is $a2^k$ (mod p) and the second input variable is $R^2$ when calculating a Montgomery modular inverse.

8. A hardware implementation as claimed in Claim 6 or Claim 7 wherein the hardware implementation further comprises a means of transmitting (20) the output of the fourth calculating means.

9. A hardware implementation as claimed in any one of Claims 6 to 8 wherein the second (18), third and fourth calculating means comprise a multiplier unit (28), an addition unit and a subtraction unit (30).

10. A hardware implementation as claimed in Claim 9 wherein the addition unit and the subtraction unit (30) employ fast carry chains and two's complement addition.

11. A hardware implementation as claimed in Claim 9 or Claim 10 wherein the multiplier unit (28) comprises a plurality of cascaded unsigned multiplier units.

12. A hardware implementation as claimed in Claim 11 wherein the multiplier unit (28) comprises a means of adding the outputs from the unsigned multiplier units employing look-ahead carry chains.

13. A hardware implementation as claimed in any one of Claims 6 to 12, wherein the hardware implementation is a field programmable gate array.

14. A hardware implementation as claimed in any one of Claims 6 to 12, wherein the hardware implementation is an application specific integrated circuit.

15. A hardware implementation as claimed in any one of Claims 6 to 14 wherein the hardware implementation operates on 256 bit data.

16. An apparatus for encrypting data comprising:

(a) a means of selecting a point on an elliptical curve;
(b) a means of determining a public key from the point on the elliptical curve and a pre-selected number; and
(c) a means of encrypting the data with the public key

wherein the means of determining the public key and the means of encrypting the data with the public key employ the hardware implementation as claimed in any one of Claims 6 to 15.

17. An apparatus for generating a private encryption key from a public encryption key comprising a means for performing the method of Claim 3 or Claim 4.

**Patentansprüche**

1. Ein kryptographisches Verfahren zum Berechnen einer klassischen modularen Inversen oder einer modularen Montgomery-Inversen einer Ganzzahl a (mod p), wobei p eine k-Bit-Ganzzahl ist, unter Verwendung einer Hardware-Implementierung, das die folgenden Schritte beinhaltet:

(1) Berechnen einer "Fast-Montgomery-Inversen" einer ersten Eingangsvariablen;

(2) Halten einer ganzzahligen Variablen z;

(3) Berechnen des modularen Montgomery-Produktes des Ausgangs aus (1) und einer zweiten Eingangsvariablen, falls z = k;

(4)

(a) Berechnen des modularen Montgomery-Produktes des Ausgangs aus (1) und $2^{2*k-z}$, und

(b) Berechnen des modularen Montgomery-Produktes des Ausgangs aus 4a und der zweiten Eingangsvariablen, falls z ≠ k; und das ferner den folgenden Schritt beinhaltet:

Auswählen einer ersten und zweiten Eingangsvariablen, wenn die klassische modulare Inverse berechnet wird, die sich von der ersten und zweiten Eingangsvariablen, die ausgewählt werden, wenn die modulare Montgomery-Inverse berechnet wird, unterscheiden.

2. Kryptographisches Verfahren, das eine Hardware-Implementierung verwendet, gemäß Anspruch 1, wobei die erste Eingangsvariable a ist und die zweite Eingangsvariable eins ist, wenn eine klassische modulare Inverse berechnet wird; und wobei die erste Eingangsvariable $a2^k \bmod(p)$ ist und die zweite Eingangsvariable $R^2$ ist, wenn die modulare Montgomery-Inverse berechnet wird.

3. Ein Verfahren zum Erzeugen eines privaten Chiffrierschlüssels aus einem öffentlichen Chiffrierschlüssel, indem mit dem Verfahren gemäß Anspruch 1 oder Anspruch 2 die modulare Inverse des öffentlichen Chiffrierschlüssels berechnet wird.

4. Ein Verfahren zum Verschlüsseln von Daten, das den durch das Verfahren gemäß Anspruch 3 erzeugten privaten Chiffrierschlüssel einsetzt, wobei der private Chiffrierschlüssel in einem RSA-Algorithmus eingesetzt wird.

5. Ein Verfahren zum Verschlüsseln von Daten, das die folgenden Schritte beinhaltet:

(a) Auswählen eines Punktes auf einer elliptischen Kurve;

(b) Bestimmen eines öffentlichen Schlüssels aus dem Punkt auf der elliptischen Kurve und einer zuvor ausgewählten Nummer und

(c) Verschlüsseln der Daten mit dem öffentlichen Schlüssel,

wobei die Schritte des Bestimmens des öffentlichen Schlüssels und des Verschlüsselns der Daten mit dem öffentlichen Schlüssel das Verfahren gemäß Anspruch 1 oder Anspruch 2 einsetzen.

6. Eine Hardware-Implementierung zum Durchführen eines kryptographischen Verfahrens zum Berechnen einer klassischen modularen Inversen oder einer modularen Montgomery-Inversen einer Ganzzahl a (mod p), wobei p eine k-Bit-Ganzzahl ist, wobei die Implementierung Folgendes beinhaltet:

(1) ein erstes Rechenmittel (14), das betriebsfähig ist, um eine "Fast-Montgomery-Inverse" einer ersten Eingangsvariablen (10) zu berechnen;

(2) ein Zählmittel z;

(3) ein zweites Rechenmittel (18), das betriebsfähig ist, um ein modulares Montgomery-Produkt des Ausgangs aus dem ersten Rechenmittel und der zweiten Eingangsvariablen zu berechnen, falls z = k;

(4) ein drittes Rechenmittel, das betriebsfähig ist, um ein modulares Montgomery-Produkt des Ausgangs des ersten Rechenmittels und $2^{2*k-z}$ zu berechnen, falls z ≠ k;

(5) ein viertes Rechenmittel, das betriebsfähig ist, um ein modulares Montgomery-Produkt des Ausgangs aus dem dritten Rechenmittel und der zweiten Eingangsvariablen zu berechnen, falls z ≠ k; und sie ferner ein Mittel beinhaltet, um, wenn die klassische modulare Inverse berechnet wird, eine erste und zweite Eingangsvariable auszuwählen, die sich von der ersten und zweiten Eingangsvariablen, die ausgewählt werden, wenn die modulare Montgomery-Inverse berechnet wird, unterscheiden.

7. Hardware-Implementierung gemäß Anspruch 6, wobei die erste Eingangsvariable a ist und die zweite Eingangsvariable eins ist, wenn eine klassische modulare Inverse berechnet wird, und wobei die erste Eingangsvariable $a2^k$ (mod p) ist und die zweite Eingangsvariable $R^2$ ist, wenn eine modulare Montgomery-Inverse berechnet wird.

8. Hardware-Implementierung gemäß Anspruch 6 oder Anspruch 7, wobei die Hardware-Implementierung ferner ein Mittel zum Übermitteln (20) des Ausgangs des vierten Rechenmittels beinhaltet.

9.  Hardware-Implementierung gemäß einem der Ansprüche 6 bis 8, wobei das zweite (18), dritte und vierte Rechenmittel eine Multiplikatoreinheit (28), eine Additionseinheit und eine Subtraktionseinheit (30) beinhalten.

10. Hardware-Implementierung gemäß Anspruch 9, wobei die Additionseinheit und die Subtraktionseinheit (30) schnelle Übertragsketten ("Carry-Chains") und Zweierkomplementaddition einsetzen.

11. Hardware-Implementierung gemäß Anspruch 9 oder Anspruch 10, wobei die Multiplikatoreinheit (28) eine Vielzahl kaskadierter vorzeichen loser Multiplikatoreinheiten beinhaltet.

12. Hardware-Implementierung gemäß Anspruch 11, wobei die Multiplikatoreinheit (28) ein Mittel zum Addieren der Ausgänge aus den vorzeichenlosen Multiplikatoreinheiten unter Einsatz von Vorgriffs-Übertragsketten beinhaltet.

13. Hardware-Implementierung gemäß einem der Ansprüche 6 bis 12, wobei die Hardware-Implementierung eine frei programmierbare logische Anordnung ist.

14. Hardware-Implementierung gemäß einem der Ansprüche 6 bis 12, wobei die Hardware-Implementierung eine anwendungsspezifische integrierte Schaltung ist.

15. Hardware-Implementierung gemäß einem der Ansprüche 6 bis 14, wobei die Hardware-Implementierung mit 256-Bit-Daten arbeitet.

16. Eine Vorrichtung zum Verschlüsseln von Daten, die Folgendes beinhaltet:

    (a) Ein Mittel zum Auswählen eines Punktes auf einer elliptischen Kurve;
    (b) ein Mittel zum Bestimmen eines öffentlichen Schlüssels aus dem Punkt auf der elliptischen Kurve und einer zuvor ausgewählten Nummer und
    (c) ein Mittel zum Verschlüsseln der Daten mit dem öffentlichen Schlüssel,

    wobei das Mittel zum Bestimmen des öffentlichen Schlüssels und das Mittel zum Verschlüsseln der Daten mit dem öffentlichen Schlüssel die Hardware-Implementierung gemäß einem der Ansprüche 6 bis 15 einsetzen.

17. Eine Vorrichtung zum Erzeugen eines privaten Chiffrierschlüssels aus einem öffentlichen Chiffrierschlüssel, die ein Mittel zum Durchführen des Verfahrens gemäß Anspruch 3 oder Anspruch 4 beinhaltet.

## Revendications

1.  Méthode cryptographique pour calculer un inverse modulaire classique ou un inverse modulaire de Montgomery d'un entier a (mod p), où p est un entier de k bits, à l'aide d'une implémentation matérielle, comprenant les étapes consistant à :

    (1) calculer le « quasi-inverse de Montgomery » d'une première variable d'entrée ;
    (2) maintenir une variable entière z ;
    (3) calculer le produit modulaire de Montgomery de la sortie de (1) et d'une deuxième variable d'entrée dans le cas où z=k;
    (4)

        (a) calculer le produit modulaire de Montgomery de la sortie de (1) et de $2^{2 \cdot k - z}$ et
        (b) calculer le produit modulaire de Montgomery de la sortie de 4a et de la deuxième variable d'entrée dans le cas où $z \neq k$ ; et comprenant de plus l'étape consistant à :

            sélectionner une première et une deuxième variable d'entrée lors du calcul de l'inverse modulaire classique qui soient différentes des première et deuxième variables d'entrée sélectionnées lors du calcul de l'inverse modulaire de Montgomery.

2.  Méthode cryptographique utilisant une implémentation matérielle telle que revendiquée dans la revendication 1 où la première variable d'entrée est a et la deuxième variable d'entrée est un lors du calcul d'un inverse modulaire classique ; et la première variable d'entrée est $a2^k \bmod(p)$ et la deuxième variable d'entrée est $R^2$ lors du calcul de l'inverse modulaire de Montgomery.

3. Une méthode pour générer une clé de cryptage privée à partir d'une clé de cryptage publique en calculant l'inverse modulaire de la clé de cryptage publique avec la méthode telle que revendiquée dans la revendication 1 ou la revendication 2.

4. Une méthode pour crypter des données employant la clé de cryptage privée générée par la méthode telle que revendiquée dans la revendication 3, où la clé de cryptage privée est employée dans un algorithme RSA.

5. Une méthode pour crypter des données comprenant les étapes consistant à :

   (a) sélectionner un point sur une courbe elliptique ;
   (b) déterminer une clé publique à partir du point sur la courbe elliptique et d'un nombre présélectionné ; et
   (c) crypter les données avec la clé publique

   où les étapes consistant à déterminer la clé publique et à crypter les données avec la clé publique emploient la méthode telle que revendiquée dans la revendication 1 ou la revendication 2.

6. Implémentation matérielle pour mettre à exécution une méthode cryptographique pour calculer un inverse modulaire classique ou un inverse modulaire de Montgomery d'un entier a (mod p), où p est un entier de k bits, comprenant :

   (1) un premier moyen de calcul (14) pouvant fonctionner pour calculer un « quasi-inverse de Montgomery » d'une première variable d'entrée (10) ;
   (2) un moyen de comptage z ;
   (3) un deuxième moyen de calcul (18) pouvant fonctionner pour calculer un produit modulaire de Montgomery de la sortie du premier moyen de calcul et de la deuxième variable d'entrée dans le cas où z = k ;
   (4) un troisième moyen de calcul pouvant fonctionner pour calculer un produit modulaire de Montgomery de la sortie du premier moyen de calcul et de $2^{2*k-z}$ dans le cas où z ≠ k;
   (5) un quatrième moyen de calcul pouvant fonctionner pour calculer un produit modulaire de Montgomery de la sortie du troisième moyen de calcul et de la deuxième variable d'entrée dans le cas où z ≠ k ;

   et comprenant de plus un moyen pour sélectionner une première et une deuxième variable d'entrée lors du calcul de l'inverse modulaire classique qui soient différentes des première et deuxième variables d'entrée sélectionnées lors du calcul de l'inverse modulaire de Montgomery.

7. Une implémentation matérielle telle que revendiquée dans la revendication 6 où la première variable d'entrée est a et la deuxième variable d'entrée est un lors du calcul d'un inverse modulaire classique et la première variable d'entrée est $a2^k \pmod p$ et la deuxième variable d'entrée est $R^2$ lors du calcul d'un inverse modulaire de Montgomery.

8. Une implémentation matérielle telle que revendiquée dans la revendication 6 ou la revendication 7 où l'implémentation matérielle comprend de plus un moyen pour transmettre (20) la sortie du quatrième moyen de calcul.

9. Une implémentation matérielle telle que revendiquée dans n'importe laquelle des revendications 6 à 8 où les deuxième (18), troisième et quatrième moyens de calcul comprennent une unité de multiplication (28), une unité d'addition et une unité de soustraction (30).

10. Une implémentation matérielle telle que revendiquée dans la revendication 9 où l'unité d'addition et l'unité de soustraction (30) emploient des chaînes de retenue accélérée et une addition en complément à deux.

11. Une implémentation matérielle telle que revendiquée dans la revendication 9 ou la revendication 10 où l'unité de multiplication (28) comprend une pluralité d'unités de multiplication en cascade non signées.

12. Une implémentation matérielle telle que revendiquée dans la revendication 11 où l'unité de multiplication (28) comprend un moyen pour ajouter les sorties des unités de multiplication non signées employant des chaînes de retenue anticipée.

**13.** Une implémentation matérielle telle que revendiquée dans n'importe laquelle des revendications 6 à 12, où l'implémentation matérielle est un réseau de portes programmable.

**14.** Une implémentation matérielle telle que revendiquée dans n'importe laquelle des revendications 6 à 12, où l'implémentation matérielle est un circuit intégré à application spécifique.

**15.** Une implémentation matérielle telle que revendiquée dans n'importe laquelle des revendications 6 à 14, où l'implémentation matérielle fonctionne sur des données de 256 bits.

**16.** Un appareil destiné à crypter des données comprenant :

(a) un moyen pour sélectionner un point sur une courbe elliptique ;
(b) un moyen pour déterminer une clé publique à partir du point sur la courbe elliptique et d'un nombre présélectionné ; et
(c) un moyen pour crypter les données avec la clé publique

où le moyen pour déterminer la clé publique et le moyen pour crypter les données avec la clé publique emploient l'implémentation matérielle telle que revendiquée dans n'importe laquelle des revendications 6 à 15.

**17.** Un appareil destiné à générer une clé de cryptage privée à partir d'une clé de cryptage publique comprenant un moyen pour mettre à exécution la méthode de la revendication 3 ou la revendication 4.

Fig. 1

Fig. 2

EP 1 600 852 B1

32-bit Multiplier

16-bit | 16-bit

16-bit | 16-bit

32-bit

+ 32-bit | 32-bit

32-bit

64-bit

64-bit Multiplier

32-bit | 32-bit

32-bit | 32-bit

64-bit

+ 64-bit | 64-bit

64-bit

128-bit

256-bit Multiplier

128-bit | 128-bit

128-bit | 128-bit

256-bit

+ 256-bit | 256-bit

256-bit

512-bit

128-bit Multiplier

64-bit | 64-bit

64-bit | 64-bit

128-bit

+ 128-bit | 128-bit

128-bit

256-bit

Fig. 3

|  | Kaliski ModInv(a) | Kaliski MonInv(a) |
|---|---|---|
| Input | a, p | $a2^k$ (mod p), p, k, $2^{2k}$ (mod p) |
| Output | $a^{-1}$ (mod p) | $a^{-1}2^k$ (mod p) |

Table 1

|  | Kaliski ModInv(a) | Kaliski MonInv(a) |
|---|---|---|
| Step 1 | $r$ = Phase1(a) <br> = $a^{-1}2^z$ (mod p) | $r$ = Phase1($a2^k$) <br> = $a^{-1}2^{-k}2^z$ (mod p); |
| Step 2 | for i = 1 to z <br> if r is even then <br>    r = r/2 <br> else r = (r+p)/2 | for i = 1 to z-k <br> if r is even then <br>    r = r/2 <br> else r = (r+p)/2 |
| Step 3 | Return <br> $r = a^{-1}$ (mod p) | $r$ = MP(r, $2^{2k}$) <br> Return <br> $r = a^{-1}2^k$ (mod p); |

Table 2

|  | Savas/Koç ModInv(a) | Savas/Koç MonInv(a) |
|---|---|---|
| Input: | a, p, m | $a2^m$ (mod p), p, m, $R^2$ |
| Output: | $a^{-1}$ (mod p) | $a^{-1}2^m$ (mod p) |

Table 3

|  | Savas/Koç ModInv(a) | Savas/Koç MonInv(a) |
|---|---|---|
| Step 1: | $r$ = Phase1(a) <br> = $a^{-1}2^z$ (mod p) | $r$ = Phase1($a2^m$) <br> = $a^{-1}2^{-m}2^z$ (mod p); |
| Step 2 | if z > m then <br> $r$ = MP($r$, 1) <br> = $a^{-1}2^{z-m}$ (mod p); <br> z = z-m < m; | if k ≤ z ≤ m then <br> $r$ = MP($r$, $R^2$) <br> = $a^{-1}2^z$ (mod p); <br> z = z+m > m; |
| Step 3 | $r$ = MP($r$, $2^{m-z}$) <br> = $a^{-1}$ (mod p); | $r$ = MP($r$, $R^2$) <br> = $a^{-1}2^z$ (mod p); |
| Step 4 | Return <br> $r$ = $a^{-1}$ (mod p); | $r$ = MP($r$, $2^{2m-z}$) <br> = $a^{-1}2^m$ (mod p); |
| Step 5 |  | Return <br> $r$ = $a^{-1}2^m$ (mod p); |

Table 4

EP 1 600 852 B1

| | Classical Modular Inverse Calculations | Montgomery Modular Inverse Calculations |
|---|---|---|
| Input | $a, p, k, 1$ | $a2^k \pmod p, p, k, R^2$ |
| Output | $a^{-1} \pmod p$ | $a^{-1}2^k \pmod p$ |

Table 5

| | Classical Modular Inverse Calculations | Montgomery Modular Inverse Calculations |
|---|---|---|
| Step 1 | $r = \text{Phase1}(a)$ $= a^{-1}2^z \pmod p$ | $r = \text{Phase1}(a2^k)$ $= a^{-1}2^{-k}2^z \pmod p;$ |
| Step 2 | if $z = k$ then     $r = MP(r, 1)$       $= a^{-1} \pmod p;$ else     $r = MP(r, 2^{2k-z})$       $= a^{-1}2^k \pmod p;$     $r = MP(r, 1)$       $= a^{-1} \pmod p;$ | if $z = k$ then     $r = MP(r, R^2)$       $= a^{-1}2^k \pmod p;$ else     $r = MP(r, 2^{2k-z})$       $= a^{-1} \pmod p;$     $r = MP(r, R^2)$       $= a^{-1}2^k \pmod p;$ |
| Step 3 | Return $r = a^{-1} \pmod p;$ | Return $r = a^{-1}2^k \pmod p;$ |

Table 6

Input: $a$, $p$ where $a < p$;

Output: Phase1 $(a) = a^{-1} 2^z \pmod{p}$, $z$ where $k \leq z \leq 2k$;

```
1. u = p; v = a; s₁ = 0; s₂ = 1; z = 0;
2. while v > 0 loop
      if u is even then
        u = u/2; s₂ = 2s₂;
      elsif v is even then
        v = v/2; s₁ = 2s₁;
      elsif u > v then
        u = (u - v)/2; s₁ = s₁ + s₂; s₂ = 2s₂;
      elsif v ≥ u then
        v = (v - u)/2; s₂ = s₂ + s₁; s₁ = 2s₁;
      end if;
      z = z + 1;
   end loop;
3. if s₁ ≥ p then s₁ = s₁ - p;
4. return Phase1(a) = p - s₁;
   return z;
```

Table 7

Step 1:    t = A*B;

Step 2:    $u = \dfrac{\left(t + \left[t * n'(\bmod r)\right] * n\right)}{r}$ ;

Step 3:    if u ≥ n then return u-n

           else return u;

Table 8

| Algorithm | Clock Speed (MHz) | Clock Cycles | Inversion Time (μs) | Area Slices | Function Inverse Type | %Speed-up with Unified Inversion Algorithm | %Area Saved with Unified Inversion Algorithm |
|---|---|---|---|---|---|---|---|
| Kaliski ModInv() | 57.75 | 1029 | 17.82 | 3,193 | Classical | 17.8 % | 18.8 % |
| Kaliski MonInv() | 40.18 | 807 | 20.08 | 15,029 | Montgomery | 27.1 % | |
| Savas/Koç ModInv() | 40.46 | 585 | 14.46 | 14,723 | Classical | - 1.2 % | 49.9 % |
| Savas/Koç MonInv() | 40.68 | 619 | 15.22 | 14,844 | Montgomery | 3.8 % | |
| Unified Inversion | 40.04 | 586 | 14.64 | 14,800 | Classical & Montgomery | N/A | N/A |

Table 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B.S. Kaliski.** *IEEE Trans. Computers,* vol. 44 (8), 1064-1065
- **E. Savas ; C.K. Koç.** *IEEE Trans. on Computers,* vol. 49 (7), 763-766
- **C.K. Koç ; T. Acar ; B.S. Kaliski.** *IEEE Micro,* vol. 16 (3), 26-33